# EUROPÄISCHE PATENTSCHRIFT

(11) **EP 4 335 078 B1**
(45) Veröffentlichungstag und Bekanntmachung des Hinweises auf die Patenterteilung: **18.06.2025**
(21) Anmeldenummer: 22726736.6
(22) Anmeldetag: 03.05.2022
(51) Int. Cl.: H04L 9/32, H04L 9/40, H04W 4/70, H04W 12/06

(54) **VERFAHREN ZUR KOMMUNIKATION VON IOT KNOTEN ODER IOT GERÄTEN IN EINEM LOKALEN NETZWERK**
COMMUNICATION METHOD FOR IOT NODES OR IOT DEVICES IN A LOCAL NETWORK
PROCÉDÉ DE COMMUNICATION DE NOEUDS IOT OU D'APPAREILS IOT DANS UN RÉSEAU LOCAL

(30) Priorität: 06.05.2021 DE 102021111841
(43) Veröffentlichungstag der Anmeldung: 13.03.2024
(73) Patentinhaber: Perinet GmbH, 12489 Berlin (DE)
(72) Erfinder: WALTHER, Karsten, 15711 Königs Wusterhausen (DE)
(74) Vertreter: Eisenführ Speiser
(86) Internationale Anmeldenummer: PCT/EP2022/061746
(87) Internationale Veröffentlichungsnummer: WO 2022/233806

(56) Entgegenhaltungen:
- DE-A1- 102019 126 686
- US-A1- 2019 253 243

## Beschreibung

Die vorliegende Erfindung betrifft ein Verfahren zur Kommunikation von loT Knoten oder loT Geräten in einem lokalen Netzwerk sowie ein lokales Netzwerk mit einer Mehrzahl von loT Knoten oder loT Geräten.

Zur Verbesserung der Automatisierung werden immer mehr Sensoren und Aktoren eingesetzt, welche netzwerkfähig sind. Derartige Netzwerke werden als Internet der Dinge oder Internet of Things loT oder als industrielles Internet der Dinge Industrial Internet of Things IloT bezeichnet. Eine Kommunikation zwischen den Sensoren und den Aktoren basiert typischerweise auf einem IP Protokoll. Hierbei können diese Sensoren und Aktoren in einem lokalen Netzwerk (Smart Home oder in einer Fabrik) eingesetzt werden. Alternativ dazu können diese loT Sensoren und Aktoren auch unmittelbar mit dem Internet verbunden sein.

Insbesondere bei der Verwendung von loT Sensoren in einem lokalen Netzwerk muss die Sicherheit der internen Kommunikation gewährleistet sein.

In der prioritätsbegründenden deutschen Patentanmeldung hat das Deutsche Patent- und Markenamt die folgenden Dokumente recherchiert: US 2020/0259667 A1 und WO 2020/143982 A1.

US 2019/253243 A1 zeigt ein Verfahren zur Kommunikation von loT-Knoten oder loT-Geräten in einem lokalen Netzwerk, das über einen Computer zumindest teilweise mit dem Internet verbunden ist. Das lokale Netzwerk weist eine Mehrzahl von loT-Knoten oder loT-Geräten auf, welche eine erste Schnittstelle zur Kommunikation mit dem lokalen Netzwerk aufweisen. Jeder der loT-Knoten oder loT-Geräte weist einen ersten öffentlichen kryptographischen Schlüssel und einen ersten privaten kryptographischen Schlüssel auf. Die loT-Knoten oder loT-Geräte in dem lokalen Netzwerk werden authentifiziert.

DE 10 2019 126 686 A1 betrifft ein Verfahren zur Kommunikation mit Internet-of-Things Geräten in einem Netzwerk. Hierzu wird eine Anfrage nach einem loT-Gerät durch einen Browser an einen DNS-Server gesendet. Eine Adresse des loT-Gerätes wird von dem DNS-Server an einen Browser übermittelt, wobei die Adresse eine IPV6 Link Local Adresse des loT-Gerätes darstellt.

Es ist daher eine Aufgabe der vorliegenden Erfindung, ein Verfahren zur Kommunikation von loT Knoten oder loT Geräten in einem lokalen Netzwerk mit einer verbesserten Sicherheit zu ermöglichen.

Diese Aufgabe wird durch ein Verfahren zur Kommunikation von loT Knoten oder loT Geräten in einem lokalen Netzwerk gemäß Anspruch 1 und durch ein Lokales Internet-of-Things IoT Netzwerk nach Anspruch 7 gelöst.

Somit wird ein Verfahren zur Kommunikation von loT Knoten oder loT Geräten in einem lokalen Netzwerk vorgesehen, das nur über einen Computer zumindest teilweise mit dem Internet verbunden ist. Das lokale Netzwerk (z.B. ein Local Area Network LAN) stellt ein Ethernet Netzwerk oder ein Single Pair Ethernet Netzwerk dar. Die loT Knoten oder die IoT Geräte sind displaylos und bedienungselementefrei ausgestaltet. Ferner weisen sie eine erste Schnittstelle zur Kommunikation in dem lokalen Netzwerk mit anderen loT Knoten oder dem Computer auf. Jeder loT Knoten oder jedes loT Gerät weist einen ersten öffentlichen kryptographischen Schlüssel und einen ersten privaten kryptographischen Schlüssel auf. Der erste private Schlüssel ist vorab in dem IoT Knoten oder dem loT Gerät abgelegt oder wird von diesem erzeugt. Eine Authentifizierung der loT Knoten oder der loT Geräte in dem lokalen Netzwerk erfolgt durch Senden einer Anfrage nach einem Root-Zertifikat durch den Computer an einen Root-Zertifikat Server im Internet, der mindestens ein Root-Zertifikat eines Herstellers der loT Knoten oder der loT Geräte aufweist. Das Root-Zertifikat wird durch den Computer empfangen und gespeichert. Der Computer überprüft, ob die in dem lokalen Netzwerk vorhandenen IoT Knoten oder loT Geräte originale und unveränderte Geräte darstellen. Dies erfolgt anhand des empfangenen Root-Zertifikats. Das Root-Zertifikat ist dazu geeignet, den ersten öffentlichen Schlüssel der loT Knoten oder der loT Geräte mit einer eindeutigen Adressinformation des loT Knotens oder des loT Gerätes zu verknüpfen. Die eindeutigen Adressinformationen können Adressinformationen darstellen, die ausschließlich in dem lokalen Netzwerk gültig ist. Der Computer überprüft anhand des gespeicherten Root-Zertifikats, ob der öffentliche Schlüssel des IoT Knotens oder des loT Gerätes durch den Hersteller signiert ist. Der erste private kryptographische Schlüssel des loT Knotens oder des loT Gerätes wird basierend auf einem kryptographischen Verfahren überprüft.

Eine ausschließlich in dem lokalen Netzwerk gültige Adressinformationen unterscheidet sich von der sonst üblichen Vorgehensweise, da typischerweise die Identifikation basierend auf globalen (routing-fähigen) Adressen erfolgt. Diese Adressen sind jedoch vom Einsatzort abhängig und können somit dem Hersteller des Knotens nicht bekannt sein. Daher kann eine Attestation nur indirekt mit Hilfe des Herstellers der loT Knoten oder Geräte ermöglicht werden. Zudem erhöht sich der Aufwand für Authentifizierungen, da die Routing-fähigen Netzwerknamen einer Verwaltung des Administrators unterliegen und nicht einem ZeroConf-Ansatz (zero configuration) folgen, der ausschließlich lokal gültigen Adressinformationen verwendet. Ein Zero Configuration Netzwerk stellt ein Netzwerk dar, das eine selbstständige Konfiguration ohne Eingriffe eines menschlichen Bedieners erlaubt. Durch die Verwendung von lediglich im lokalen Netzwerk gültige Adressinformationen kann eine automatische und selbstständige Konfiguration der loT Sensoren oder Geräte in dem lokalen Netzwerk erfolgen. Die eindeutige lokale Adressinformation kann beispielsweise eine Link Local Address IPv6 oder einen Multicast Domain Name Service Netzwerknamen darstellen.

Gemäß einem Aspekt der vorliegenden Erfindung kann der Computer nach Empfangen und Speichern des Root-Zertifikats vom Internet getrennt werden, so dass keine aktive Internetverbindung vorhanden ist. Damit kann die weitere Authentifizierung der in dem lokalen Netzwerk vorhandenen loT Knoten oder der loT Geräte ohne aktive Internetverbindung und damit anonym erfolgen. Ein Zugriff auf das lokale Netzwerk über das Internet und ein möglicher Angriff auf das lokale Netzwerk kann damit verhindert werden.

Gemäß einem Aspekt der Erfindung weist der loT Knoten oder das loT Gerät lediglich eine erste Schnittstelle zur Kommunikation mit dem Netzwerk und optional eine zweite Schnittstelle zur Kommunikation mit Sensoren oder Aktoren auf, die mit dem loT gekoppelt sind.

Somit ist weder ein Display noch ein Bedienelement oder Eingabeelement vorhanden. Einstellungen und Parameter können z.B. über einen Browser auf dem Computer 130 geändert oder angepasst werden.

Die Erfindung betrifft ebenfalls ein lokales Internet-of-Things loT Netzwerk. Das Netzwerk weist eine Mehrzahl von Internet-of-Things loT Knoten oder Geräten auf, welche Displaylos und Bedienungselemente-frei ausgestaltet sind und jeweils eine erste Schnittstelle zur Kommunikation mit dem lokalen Netzwerk mit anderen loT Knoten oder einem Computer aufweisen. Das Netzwerk weist einen Computer auf, der zumindest teilweise mit dem Internet verbunden ist. Jeder loT Knoten oder jedes loT Gerät weist einen ersten öffentlichen kryptographischen Schlüssel und einen ersten privaten kryptographischen Schlüssel auf. Der erste private Schlüssel ist vorab abgelegt oder wird von dem loT Knoten oder loT Gerät selber erzeugt. Der Computer ist dazu ausgestaltet, loT Knoten oder loT Geräte in dem lokalen Netzwerk zu authentifizieren, indem eine Anfrage nach einem Root-Zertifikat von dem Computer an einen Root-Zertifikat-Server im Internet gesendet wird, der mindestens ein Root-Zertifikat eines Herstellers der loT Knoten oder der loT Geräte aufweist. Das Root-Zertifikat wird durch den Computer empfangen und gespeichert und es wird durch den Computer anhand des empfangenen Root-Zertifikats überprüft, ob die loT Knoten oder loT Geräte originale und unveränderte Geräte sind. Das Root-Zertifikat ist dazu geeignet, den ersten öffentlichen Schlüssel der IoT Knoten oder loT Geräte mit einer eindeutigen ausschließlich lokal gültigen Adressinformation des loT Knotens oder des loT Gerätes zu verknüpfen. Der Computer ist dazu ausgestaltet, anhand des gespeicherten Root-Zertifikats zu überprüfen, ob der erste öffentliche Schlüssel der loT Knoten oder der loT Geräte durch den Hersteller des loT Knotens oder des loT Gerätes signiert sind. Der erste private Schlüssel des loT Knotens oder des loT Gerätes wird basierend auf einem kryptographischen Verfahren überprüft.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung eines lokalen Netzwerkes gemäß einem ersten Ausführungsbeispiel der Erfindung,
- Fig. 2: zeigt eine vergrößerte Ansicht eines Teils des lokalen Netzwerkes von Fig. 1,
- Fig. 3: zeigt eine schematische Darstellung des lokalen Netzwerkes von Fig. 1 während der Überprüfung der in dem lokalen Netzwerk vorhandenen loT Knoten,
- Fig. 4: zeigt eine schematische Darstellung eines lokalen Netzwerkes gemäß einem zweiten Ausführungsbeispiel, und
- Fig. 5: zeigt eine schematische Darstellung einer Rücksetzeinheit gemäß einem Ausführungsbeispiel der Erfindung.

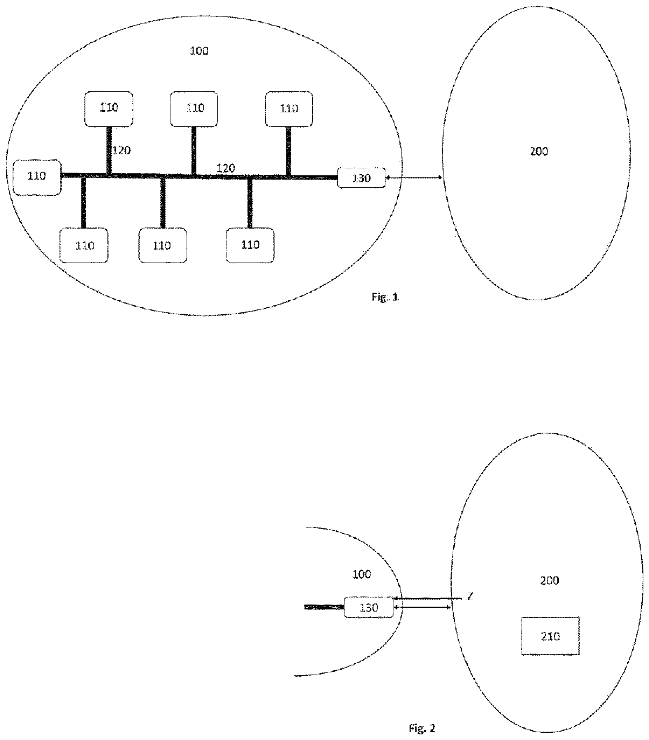

Fig. 1 zeigt eine schematische Darstellung eines lokalen Netzwerkes gemäß einem ersten Ausführungsbeispiel der Erfindung und Fig. 2 zeigt eine vergrößerte Ansicht eines Teils des lokalen Netzwerkes von Fig. 1. Ein lokales Netzwerk 100 weist eine Mehrzahl von loT (Internet of Things) Knoten 110 auf, welche durch ein Ethernet-Netzwerk oder ein Single Pair Ethernet-Netzwerk 120 miteinander verbunden sind. Ferner ist ein Computer 130 mit dem lokalen Netzwerk 120 verbunden. Der Computer 130 kann eine Verbindung mit dem Internet 200 aufbauen. Diese Verbindung mit dem Internet kann wie in Fig. 2 dargestellt dazu verwendet werden, ein Root-Zertifikat Z für die loT Knoten 110 in dem lokalen Netzwerk 100 beispielsweise von einem Root-Zertifikat-Server 210 eines Herstellers der loT Knoten 110 abzurufen. Gemäß dem ersten Ausführungsbeispiel hat somit lediglich der mindestens eine Computer 130 die Möglichkeit, mit dem Internet 200 und insbesondere mit dem Root-Zertifikat-Server 210 zu kommunizieren. Die loT Knoten 110 können lediglich innerhalb des lokalen Netzwerkes 120 mit anderen IoT Knoten 110 oder mit dem Computer 130 kommunizieren. Damit sollen die Möglichkeiten eines externen unerlaubten Zugriffs auf die loT Knoten verringert werden.

Gemäß dem ersten Ausführungsbeispiel weist der mindestens eine Computer 130, welcher mit dem Internet verbindbar ist, ausreichende Mechanismen zum Schutz vor unautorisierten Zugriffen (beispielsweise Firewalls, Antiviren-Software etc.) auf.

Das erste Ausführungsbeispiel der Erfindung betrifft somit insbesondere das Vorsehen der internen Sicherheit des lokalen Netzwerks 100. Insbesondere soll sichergestellt werden, dass die IoT Knoten innerhalb des Netzwerkes 120 originale und unveränderte Geräte darstellen. Damit soll vermieden werden, dass Angriffe oder unerlaubte Zugriffe aus dem Inneren des lokalen Netzwerkes 100 möglich sind. Insbesondere soll vermieden werden, dass loT Knoten auf andere loT Knoten zugreifen und Daten auslesen und verändern, ohne dass dies für die Erfüllung ihrer vorgesehenen Aufgabe notwendig wäre.

Gemäß dem ersten Ausführungsbeispiel soll eine automatische Authentifizierung (im Sinne eines Zero Configuration Netzwerkes) der vorhandenen bzw. neu hinzugekommenen loT Knoten erfolgen. Dies ist insbesondere vorteilhaft, weil damit keine zentralisierten, auf Zertifikaten basierten Sicherheitsmechanismen verwendet werden müssen. Ferner kann auch vermieden werden, dass für jeden loT Knoten eine Kombination aus Benutzername und Passwort händisch eingegeben werden muss.

Somit kann auch eine automatisierte Maschine-zu-Maschine Kommunikation auch in lokalen Netzwerken mit einer sehr hohen Anzahl von loT Knoten 110 ermöglicht werden.

Gemäß dem ersten Ausführungsbeispiel soll eine automatische Möglichkeit der Authentifizierung der loT Knoten 110 innerhalb des lokalen Netzwerkes 100 ermöglicht werden, ohne dass hierbei eine kontinuierliche aktive Internetverbindung beispielsweise zu einem Root-Zertifikat-Server 210 vorhanden sein muss. Dies wird erreicht, indem alle Sicherheitsmechanismen in das lokale Netz verlegt werden, ohne dass bei der Authentifizierung eine aktive Internetverbindung vorhanden sein muss. Hierzu baut der mindestens eine Computer 130 eine aktive Internetverbindung zu einem Root-Zertifikat-Server 210 auf und schickt eine Anforderung nach einem Root-Zertifikat des Herstellers der loT Knoten 110. Das Root-Zertifikat Z kann auf dem Computer 130 gespeichert werden. Hierbei kann das Zertifikat Z in einem Browser auf dem Computer 130 installiert werden. Danach kann die aktive Internetverbindung getrennt werden, so dass das lokale Netz 110 bzw. der Computer 130 vom Internet 200 getrennt ist.

Die IoT Knoten oder loT Geräte stellen Geräte dar, die Display-los und Bedienungselemente-frei ausgestaltet sind. Damit können die Kosten für die loT Knoten oder loT Geräte reduziert werden. Eine Ansteuerung der loT Knoten oder loT Geräte kann nur über das lokale Netzwerk erfolgen. Beispielsweise kann eine Einstellung von Parametern über einen Browser auf dem Computer 130 erfolgen.

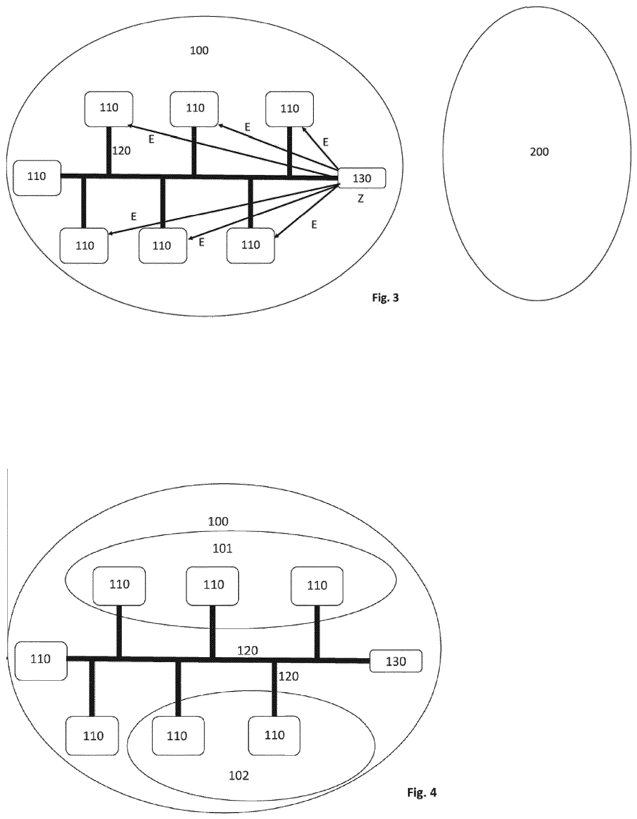

Fig. 3 zeigt eine schematische Darstellung des lokalen Netzwerkes von Fig. 1 während der Überprüfung der in dem lokalen Netzwerk vorhandenen IoT Knoten 110. Nachdem die aktive Internetverbindung des Computers 130 mit dem Internet 200 getrennt worden ist, kann der Computer 130 die IoT Knoten 110 in dem lokalen Netzwerk 100 überprüfen. Hierbei kann der Computer 130 zunächst eine Echtheit E überprüfen, d. h. es wird überprüft, ob die vorhandenen loT Knoten 110 originale und unveränderte loT Knoten 110 oder loT Geräte darstellen.

Jedem der IoT Knoten 110 ist ein erster öffentlicher kryptographischer Schlüssel und ein erster privater kryptographischer Schlüssel zugeordnet. Der erste private kryptographische Schlüssel der loT Knoten 110 kann während der Herstellung des Gerätes durch den Hersteller in dem loT Knoten 110 gespeichert oder abgelegt werden. Dieser erste private Schlüssel kann derart abgelegt werden, dass er nicht mehr verändert werden kann. Alternativ dazu kann der loT Knoten 110 dazu ausgestaltet sein, diesen ersten privaten kryptographischen Schlüssel selber zu erzeugen. Jeder loT Knoten 110 wird ebenfalls bei der Herstellung durch den Hersteller mit einer eindeutigen Adressinformation vorgesehen. Diese eindeutige Adressinformation kann ein ausschließlich im lokalen Netz gültiger Gerätename sein. Die eindeutige lokale Adressinformation kann beispielsweise eine Link Local Address IPv6 oder einen Multicast Domain Name Service Netzwerknamen darstellen.

Zur Überprüfung der loT Knoten 110 kann der Browser des Computers 130 das installierte Root-Zertifikat Z verwenden, um zu überprüfen, ob der öffentliche Schlüssel der loT Knoten 110 durch den Hersteller der IoT Knoten 110 signiert wurde. Beispielsweise ein Transport Layer Security TLS Verfahren kann dazu verwendet werden, dass anhand des ersten privaten Schlüssels nachgewiesen werden kann, dass der loT Knoten 110 ein Originalgerät darstellt. Der Vorteil der oben beschriebenen Authentifizierung der loT Knoten 110 ist, dass dies ohne aktive Internetverbindung erfolgen kann und somit anonym und offline erfolgen kann.

Damit ist eine Device Attestation, d. h. eine Überprüfung der IoT Knoten 110, gewährleistet.

Fig. 4 zeigt eine schematische Darstellung eines lokalen Netzwerkes gemäß einem zweiten Ausführungsbeispiel. Das lokale Netzwerk 100 gemäß dem zweiten Ausführungsbeispiel kann auf dem lokalen Netzwerk 100 gemäß dem ersten Ausführungsbeispiel von Fig. 1 basieren. Somit ist eine Mehrzahl von loT Knoten 110 über ein Netz 120 miteinander sowie mit einem Computer 130 gekoppelt. In dem zweiten Ausführungsbeispiel sollen diejenigen loT Knoten 110, welche funktionell zusammen gehören, zu virtuellen lokalen Netzwerken 101, 102 zusammengefügt werden. Dies erfolgt durch eine lokale Public-Key-Infrastruktur PKI. Das erste virtuelle lokale Netzwerk 101 kann somit eine erste lokale Public-Key-Infrastruktur PKI 1 darstellen. Das zweite virtuelle lokale Netzwerk 102 kann eine zweite Public-Key-Infrastruktur PKI 2 darstellen. Derartige virtuelle lokale Netzwerke können in Abhängigkeit der benötigten Anwendung zusammengestellt werden. Gemäß dem zweiten Ausführungsbeispiel kann hierzu ein zweites kryptographisches Schlüsselpaar in dem loT Knoten 110 erzeugt oder auf den loT Knoten 110 geladen werden. Das Schlüsselpaar kann durch ein Zertifikat für eine lokale Root Public Key Infrastruktur PKI Instanzsigniert sein. Falls ein IoT Knoten 110 in der gewünschten Anwendung als ein Server fungiert, dann kann das PKI Zertifikat als Host-Zertifikat verwendet werden. Anhand dieses Host-Zertifikats können andere loT Knoten 110 in dem Netzwerk die Identität des Knotens überprüfen und können bei Bedarf eine verschlüsselte Kommunikation aufbauen.

In einem weiteren Beispiel basierend auf dem zweiten Ausführungsbeispiel kann der loT Knoten 110 sowohl als Server als auch als Client fungieren. Hierbei kann der loT Knoten 110 beispielsweise als Message Queuing Telemetry Transport MQTT Subscriber/Publis-her(Client) oder Broker(Server) oder http-Server fungieren. Hierbei kann für den loT Knoten 110 ein User Zertifikat auf Basis des kryptographischen Schlüsselpaars erzeugt werden, welches der lokale PKI Root signiert und das auf dem loT Knoten 110 gespeichert werden kann. Das Zertifikat eines derartigen PKI Roots kann dann optional als vertrauenswürdiges Root Zertifikat auf dem anderen loT Knoten 110 gespeichert werden. Damit ist ein automatischer Verbindungsaufbau zwischen den loT Knoten 110 in dem lokalen Netzwerk 100 möglich. Hierbei ist es vorteilhafterweise möglich, dass die IoT Knoten 110, welche die Verbindung aufbauen, sich gegenseitig authentifizieren können und eine verschlüsselte Kommunikation aufbauen können. Insbesondere kann damit eine automatisierte Authentifizierung und Verbindungsaufbau erfolgen, ohne dass das lokale Netzwerk mit dem Internet verbunden sein muss und ohne dass ein Administrator in den Vorgang eingreifen muss.

Gemäß dem zweiten Ausführungsbeispiel kann eine lokale PKI für eine M2M (Machine-to-Machine) Kommunikation basierend auf einem mTLS (Mutual Transport Layer Security) vorgesehen sein.

Gemäß einem Aspekt des zweiten Ausführungsbeispiels kann eine Rechteverwaltung der Kommunikation der loT Knoten 110 vorgesehen sein. Somit kann festgelegt werden, welcher der loT Knoten 110 Daten lesen kann, Daten modifizieren kann, neue Daten anlegen kann oder einen Server innerhalb des lokalen Netzwerkes 100 konfigurieren kann. Jeder loT Knoten 110 kann ein Client Zertifikat aufweisen, in welchem dessen Berechtigungen abgelegt sind. Diese Berechtigungen können durch einen Server (als Server fungierende loT Knoten 110) überprüft werden.

Gemäß einem Aspekt der vorliegenden Erfindung kann das zweite Ausführungsbeispiel zur Maschine-zu-Maschine Kommunikation und/oder zur Kommunikation zwischen einer Maschine und einem menschlichen Nutzer oder zwischen zwei menschlichen Nutzern verwendet werden. Ein menschlicher Nutzer kann sich beispielsweise mittels eines Gerätes (Secure Stick) unabhängig von dem verwendeten loT Knoten 110 innerhalb der lokalen PKI Struktur identifizieren.

Gemäß einem Aspekt der vorliegenden Erfindung kann die lokale Root PKI Instanz einen loT Knoten 110 darstellen. Somit kann ein derartiger IoT Knoten 110 die Überprüfung von anderen loT Knoten 110 in dem lokalen Netzwerk 100 oder die Aufnahme von neuen loT Knoten 110 in das lokale Netzwerk 100 automatisiert überwachen.

Gemäß einem Aspekt der vorliegenden Erfindung können mehrere virtuelle lokale Netzwerke vorgesehen sein, welche sich auch überschneiden können, um mehrere Anwendungen in dem lokalen Netzwerk 100 ausführen zu können. Für jede Anwendung kann ein separater PKI Root verwendet werden. Für jedes PKI Root kann somit ein virtuelles lokales Netzwerk 101, 102 vorgesehen werden. Dies ist vorteilhaft, weil somit eine Trennung der jeweiligen Anwendungen basierend auf den virtuellen lokalen Netzwerken 101, 102 ermöglicht wird.

Gemäß einem weiteren Aspekt der vorliegenden Erfindung kann ein Hinzufügen eines neuen Knotens zu einem virtuellen lokalen Netzwerk eines Verwaltungsknotens halb automatisch erfolgen. Der Verwaltungsknoten kann den Nutzer auf nicht zugeordnete Knoten hinweisen. Der Nutzer kann entscheiden, ob ein derartiger Knoten ausgewählt werden soll oder nicht. Nach Auswahl des neuen Knotens kann der Knoten durch den Verwaltungsknoten wie oben beschrieben automatisch zugeordnet oder ignoriert werden.

Gemäß einem Ausführungsbeispiel der Erfindung führt einer der loT Knoten 110 einen Reset oder ein Rücksetzten durch, wenn er eine Reset-Aufforderung mittels eines speziellen Paketes erhält, das auf Medienzugriffsebene empfangen wurde. Ein derartiges Paket ist typischerweise ungültig, kann aber individuelle Informationen des Knotens enthalten. Vorteilhafterweise ist es in einem IP-Protokoll basierten lokalen Netzwerk nur dann möglich, derartige Pakete zum loT Knoten zu senden, wenn der Benutzer direkt ohne Zwischenstationen wie Switche mit dem loT Knoten verbunden ist. Dies rührt daher, weil derartige Pakete nicht von einem Switch weitergeleitet werden. Somit ist auf einfache Art und Weise sichergestellt, dass eine Reset- oder Rücksetz-Anforderung nur dann möglich ist, wenn der Benutzer auch einen tatsächlichen physischen Zugriff auf den Knoten besitzt. Beispielsweise bei einem Ethernet Netzwerk mit einem 100 Base T1 Kabel beträgt der Maximalabstand 15 m zum Knoten.

Somit kann erfindungsgemäß auf einen Verlust des auf dem Computer 130 gespeicherten Zertifikats reagiert werden. Dies kann beispielsweise erfolgen, wenn der Computer 130 defekt ist. Wenn kein Zugriff auf das benötigte Zertifikat mehr möglich ist, dann muss die lokale PKI Struktur neu aufgesetzt werden. Dies ist im Stand der Technik durch eine Betätigung eines Reset Knopfes an dem IoT Knoten oder durch die Übermittlung eines entsprechenden Reset Befehls (unverschlüsselt) möglich. Die Verwendung eines unverschlüsselten Reset Befehls ist jedoch aus Sicherheitsaspekten nicht gewünscht, da somit das lokale Netzwerk von einem nicht Autorisierten zurückgesetzt werden kann. Ferner ist die Verwendung eines Reset Knopfes an dem loT Knoten mit weiteren Kosten verbunden, die erfindungsgemäß vermieden werden sollen.

Der loT Knoten gemäß der Erfindung weist weder ein Display noch Bedienelemente noch einen Reset Knopf auf. Der loT Knoten weist lediglich eine erste Schnittstelle zur Kommunikation mit dem Netzwerk 120 auf. Eine zweite Schnittstelle kann zur Kommunikation mit Geräten verwendet werden, welche an den loT Knoten 110 gekoppelt sind.

Mit der erfindungsgemäßen Rücksetzfunktion kann sichergestellt werden, dass kein Angreifer über das Internet die IoT Knoten 110 in dem lokalen Netzwerk 100 zurücksetzen kann. Vielmehr muss der Befehl bzw. die Aufforderung für das Rücksetzen von einem Gerät gesendet werden, welches physisch direkt über ein Netzwerkkabel mit dem rückzusetzenden loT Knoten 110 gekoppelt ist. Die erfindungsgemäße Rücksetzaufforderung stellt somit einen virtuellen Reset-Knopf dar.

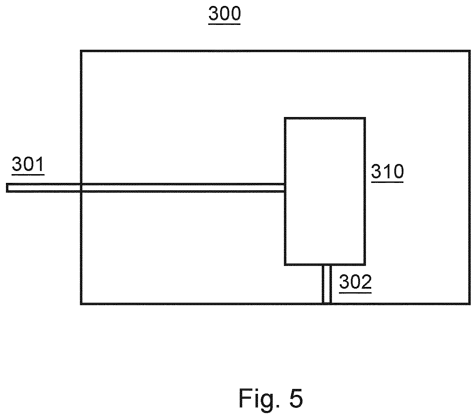

Fig. 5 zeigt eine schematische Darstellung einer Rücksetzeinheit gemäß einem Ausführungsbeispiel der Erfindung. Die Rücksetzeinheit 300 weist eine interne Energieversorgung 310 beispielsweise in Form einer Batterie oder einer Akkumulatoreinheit auf. Die Rücksetzeinheit 300 weist eine erste Schnittstelle 301 beispielsweise zum Anschluss an ein Single Pair Ethernet Hybridkabel auf. Die Rücksetzeinheit 300 weist eine zweite Schnittstelle 302 in Form eines USB Ladeanschlusses auf. Über diesen USB Ladeanschluss 302 kann die Energieversorgung 310 aufgeladen werden. Mittels der Rücksetzeinheit 300, welche an einen IoT Knoten 110 angeschlossen werden kann oder in einem loT Knoten vorgesehen sein kann, kann der loT Knoten mittels der Rücksetzeinheit 300 zurückgesetzt werden. Dies kann beispielsweise dann erfolgen, wenn ungültige Zustände der Leitungen bei einer Single Pair Ethernet Hybridverbindung vorliegen. Ein Beispiel für derartige ungültige Zustände ist eine zu niedrige Versorgungsspannung bei gleichzeitiger Abwesenheit eines T1 Links. Der loT Knoten 110 muss dann von dem Netzwerk 120 getrennt und mit der Rücksetzeinheit 300 verbunden werden. Dies erfordert wiederum einen physischen Zugriff auf den loT Knoten 110. Hierbei wird das ursprüngliche beispielsweise Single Pair Ethernet Hybridkabel von dem Knoten loT 120 entfernt und der Knoten wird an die Rücksetzeinheit 300 angeschlossen. Die Rücksetzeinheit 300 dient dann als Energieversorgung für den loT Knoten 110 und kann das Rücksetzen initiieren. Durch die Rücksetzeinheit 300 werden dann alle während des Betriebes installierten/erzeugten zweiten Zertifikate und Schlüsselpaare sowie weitere Informationen auf dem loT Knoten 110 gelöscht und der Knoten muss erneut vom Verwaltungsknoten mit einem Root-Zertifikat eingebunden werden. Hinsichtlich des Sicherheitsmerkmals "Erschleichen von Zugriffsrechten" ist die Verwendung von auf dem loT Knoten erzeugten 2. Schlüsselpaaren besonders vorteilhaft, da diese nach dem Rücksetzen nicht wieder hergestellt werden können. Ferner muss nach dem Rücksetzen stets ein erneutes Einbinden des IoT Knotens 110 in ein virtuelles lokales Netz erfolgen, wodurch der Betreiber des virtuellen lokalen Netzes stets Kenntnis von dem Rücksetzvorgang erlangt.

Durch das Rücksetzen gemäß der Erfindung können alle Schlüsselpaare des Knotens sowie Zertifikate gelöscht werden. Dies hat zur Folge, dass der loT Knoten weder bei einem Server der lokalen PKI Struktur angemeldet werden kann, noch kann ein Client auf diesen zurückgesetzten loT Knoten zugreifen. Damit kann sichergestellt werden, dass ein Firmware Reset oder eine sich dadurch ergebende Möglichkeit des unautorisierten Zugriffs auf das lokale Netzwerk nicht unbemerkt erfolgen kann. Vielmehr muss der Knoten erneut in die Netzwerkumgebung eingeführt werden.

Gemäß einem Aspekt der vorliegenden Erfindung wird ein Verfahren zur sicheren lokalen Kommunikation netzwerkfähiger loT Knoten innerhalb eines lokalen Netzwerks vorgesehen. Eine Einrichtung oder Installation der netzwerkfähigen loT Knoten kann unter Verwendung kryptographischer Verfahren und zwei kryptographischer Schlüsselpaare erfolgen. Hiermit kann eine anonyme Einrichtung einer gesicherten Kommunikation in einem lokalen Netzwerk erlaubt werden. Ein Schlüsselpaar kann während der Produktion der loT Knoten oder während der Inbetriebnahme erzeugt werden. Die zwei Schlüsselpaare können durch ein Zertifikat mit einer bei der Produktion vergebenen Netzwerkadresse, welche in jedem lokalen Netzwerk gültig ist, verifiziert werden.

Gemäß einem Aspekt der vorliegenden Erfindung kann die Echtheit eines loT Knotens anhand von lokalen Adressinformationen (beispielsweise eines mdns Hostnamens) sowie eines gerätespezifischen privaten Schlüssels überprüft werden.

Gemäß einem Aspekt der vorliegenden Erfindung kann ein Reset der in dem lokalen Netzwerk vorgesehenen loT Knoten oder loT Geräte erfolgen, indem spezielle Pakete auf der Medienzugriffsebene an die loT Knoten versandt werden. Dies ist vorteilhaft, weil damit Angriffe wie Denial of Services vermieden werden können.

Gemäß einem Aspekt der vorliegenden Erfindung kann eine Rücksetzeinheit in oder an einem loT Knoten vorgesehen werden, welcher ohne Reset-Knopf auskommt. Ein Befehl zum Reset kann über eine erste Schnittstelle der Rücksetzeinheit erfolgen, welche mit einem Single Pair Ethernet Hybridkabel gekoppelt ist. Ein Reset kann durch Empfangen eines speziellen Paketes oder durch Erfassen von ungültigen Leitungszuständen erfolgen.

Gemäß einem Aspekt der vorliegenden Erfindung können die loT Knoten netzwerkfähige Smart-Home Geräte oder Geräte einer Gebäudeautomatisierung darstellen.

## Patentansprüche

1. Verfahren zur Kommunikation von loT Knoten (110) oder loT Geräten in einem lokalen Netzwerk (100), das nur über einen Computer (130) zumindest zeitweise mit dem Internet (200) verbunden ist, wobei das lokale Netzwerk (100) ein Ethernet-Netzwerk oder eine Single Pair Ethernet-Netzwerk darstellt, wobei die loT Knoten (110) oder loT Geräte jeweils eine erste Schnittstelle zur Kommunikation in dem lokalen Netzwerk (120) mit anderen loT Knoten (110) oder dem Computer (130) aufweisen, wobei jeder loT Knoten (110) oder jedes loT Gerät einen ersten öffentlichen kryptographischen Schlüssel und einen ersten privaten kryptographischen Schlüssel aufweist, wobei der erste private Schlüssel vorab abgelegt oder von dem loT Knoten (110) oder dem loT Gerät selber erzeugt wird, mit dem Schritt:
Authentifizierung von loT Knoten (110) oder loT Geräten in einem lokalen Netzwerk (100), **gekennzeichnet durch**
- Senden einer Anfrage nach einem Root-Zertifikat (Z) durch den Computer (130) an einen Root-Zertifikat-Server (210) im Internet (200), der mindestens ein Root-Zertifikat (Z) eines Herstellers der loT Knoten (110) oder der loT Geräte aufweist,
- Empfangen und Speichern des Root-Zertifikats (Z) durch den Computer (130), und
- Überprüfen durch den Computer (130) anhand des empfangenen Root-Zertifikat (Z), ob die loT Knoten (130) oder loT Geräte originale und unveränderte Geräte sind, wobei das Root-Zertifikat (Z) dazu geeignet ist, den ersten öffentlichen Schüssel der loT Knoten (110) oder loT Geräte mit einer eindeutigen ausschließlich im lokalen Netz gültigen Adressinformation des loT Knotens (110) oder des loT Gerätes zu verknüpfen,
wobei der Computer (130) anhand des gespeicherten Root-Zertifikats (Z) überprüft, ob der öffentliche Schlüssel des loT Knotens (110) oder des loT Gerätes durch den Hersteller des loT Knotens (110) oder des loT Gerätes signiert ist,
wobei der erste private Schlüssel des loT Knotens (110) oder des loT Gerätes basierend auf einem kryptografischen Verfahren überprüft wird,
wobei die loT Knoten (110) oder die loT Geräte Display-los und Bedienungselemente-frei ausgestaltet sind.

2. Verfahren zur Kommunikation von loT Knoten (110) oder loT Geräten in einem lokalen Netzwerk (100) nach Anspruch 1, wobei
der Computer (130) nach Empfang des Root-Zertifikats (Z) von dem Root-Zertifikat-Servers (210) die Verbindung mit dem Internet (200) trennt, bevor die Prüfung der loT Knoten (110) oder des loT Gerätes erfolgt.

3. Verfahren zur Kommunikation von loT Knoten (110) oder loT Geräten in einem lokalen Netzwerk (100) nach Anspruch 1 oder 2, wobei
jeder loT Knoten (110) oder jedes loT Gerät einen lokalen und eindeutigen Hostnamen, insbesondere eine IPv6 link local Adresse oder einen Multicast Domain Name System mDNS Netzwerknamen, aufweist.

4. Verfahren zur Kommunikation von loT Knoten (110) oder loT Geräten in einem lokalen Netzwerk (100) nach einem der Ansprüche 1 bis 3, ferner mit den Schritten:
Einbinden von loT Knoten (110) oder loT Geräten in ein virtuelles lokales Netzwerk (101, 102) in Form einer lokalen Public-Key-Infrastruktur,
wobei jedem dieser loT Knoten (110) oder loT Geräten ein zweites kryptografisches Schlüsselpaar zugeordnet ist.

5. Verfahren zur Kommunikation von loT Knoten (110) oder loT Geräten in einem lokalen Netzwerk (100) nach einem der Ansprüche 1 bis 4, ferner mit den Schritten:
Rücksetzen eines loT Knotens (110) oder eines loT Gerätes mittels einer Rücksetzeinheit (300), welche eine erste Schnittstelle (301) aufweist, welche dazu ausgestaltet ist, an ein Single Pair Ethernet Hybridkabel angeschlossen zu werden, wobei die Rücksetzeinheit (300) den IoT Knoten (110) oder das loT Gerät zurücksetzt, wenn ungültige Zustände auf der Single Pair Ethernet Hybridleitung vorhanden sind.

6. Verfahren zur Kommunikation von loT Knoten (110) oder loT Geräten in einem lokalen Netzwerk (100) nach einem der Ansprüche 1 bis 5, wobei
mindestens einer der loT Knoten (110) oder eines der loT Geräte ein Client-Zertifikat aufweist, in welchem Nutzungsrechte, insbesondere Lese- und/oder Schreibrechte, des loT Knotens (110) oder des loT Gerätes gespeichert sind.

7. Lokales Internet-of-Things loT Netzwerk (100) mit
einer Mehrzahl von loT Knoten (110) oder loT Geräten, welche jeweils eine erste Schnittstelle zur Kommunikation in dem lokalen Netzwerk (120) in Form eines Ethernet-Netzwerkes oder eines Single Pair Ethernet-Netzwerkes mit anderen loT Knoten (110) oder einem Computer (130) in dem lokalen Netzwerk aufweisen,
mindestens einem Computer (130), der zumindest zeitweise mit dem Internet (200) verbunden ist,
wobei jeder loT Knoten (110) oder jedes loT Gerät einen ersten öffentlichen kryptographischen Schlüssel und einen ersten privaten kryptographischen Schlüssel aufweist, wobei der erste private Schlüssel vorab abgelegt oder von dem loT Knoten (110) oder dem loT Gerät selber erzeugt wird.
**dadurch gekennzeichnet, dass** der Computer (130) dazu ausgestaltet ist, IoT Knoten (110) oder loT Geräte in einem lokalen Netzwerk (100) zu authentifizieren durch Senden einer Anfrage nach einem Root-Zertifikat (Z) durch den Computer (130) an einen Root-Zertifikat-Server (210) im Internet (200), der mindestens ein Root-Zertifikat (Z) eines Herstellers der loT Knoten (110) oder der loT Geräte aufweist, durch Empfangen und Speichern des Root-Zertifikats (Z) durch den Computer (130) und durch Überprüfen, durch den Computer (130) anhand des empfangenen Root-Zertifikats (Z), ob die loT Knoten (130) oder loT Geräte originale und unveränderte Geräte sind, wobei das Root-Zertifikat (Z) dazu geeignet ist, den ersten öffentlichen Schüssel der loT Knoten (110) oder loT Geräte mit einer eindeutigen ausschließlich lokal gültigen Adressinformation des loT Knotens (110) oder des loT Gerätes zu verknüpfen,
wobei der Computer (130) dazu ausgestaltet ist, anhand des gespeicherten Root-Zertifikats (Z) zu überprüfen, ob der erste öffentliche Schlüssel des loT Knotens (110) oder des loT Gerätes durch den Hersteller des IoT Knotens (110) oder des loT Gerätes signiert ist,
wobei der erste private Schlüssel des loT Knotens (110) oder des loT Gerätes basierend auf einem kryptografischen Verfahren überprüft wird,
wobei die Mehrzahl von loT Knoten (110) oder loT Geräten Display-los und Bedienungselemente-frei ausgestaltet sind.

8. Lokales Internet-of-Things loT Netzwerk nach Anspruch 7, ferner mit
mindestens einer Rücksetzeinheit (300), welche eine erste Schnittstelle (301) aufweist, mittels welcher die Rücksetzeinheit (300) an eine Single Pair Ethernet Hybridleitung koppelbar ist,
wobei die Rücksetzeinheit (300) dazu ausgestaltet ist, einen angeschlossenen loT Knoten (110) oder ein angeschlossenes loT Gerät zurückzusetzen, wenn ungültige Zustände auf der Single Pair Ethernet Hybridleitung vorhanden sind.

## Claims

1. Method for communication of loT nodes (110) or loT devices in a local network (100), which is at least temporarily connected to the Internet (200) solely via a computer (130), wherein the local network (100) is an Ethernet network or a single pair Ethernet network, wherein the loT nodes (110) or the loT devices each have a first interface for communication in the local network (120) with other loT nodes (110) or with the computer (130), wherein each loT node (110) or each loT device has a first public cryptographic key and a first private cryptographic key, the first private key being stored in advance or generated by the loT node (110) or the loT device itself, having the step:
authentication of IoT nodes (110) or loT devices in a local network (100),
**characterized by**
- sending a request for a root certificate (Z) to a root-certificate server (210) on the Internet (200) by means of the computer (130), said root-certificate server having at least one root certificate (Z) from a manufacturer of the loT nodes (110) or the loT devices,
- receiving and storing the root certificate (Z) by means of the computer (130), and
- checking by means of the computer (130) whether the loT nodes (130) or loT devices are original and unmodified devices by using the received root certificate (Z), wherein the root certificate (Z) is suitable for linking the first public key of the loT nodes (110) or loT devices to unique address information of the loT node (110) or the loT device that is valid exclusively in the local network,
wherein the computer (130) uses the stored root certificate (Z) to check whether the public key of the loT node (110) or the loT device is signed by the manufacturer of the loT node (110) or the loT device,
wherein the first private key of the loT node (110) or the loT device is checked based on a cryptographic method,
wherein the loT nodes (110) or the loT devices are designed to be display-free and operating-element-free.

2. Method for communication of loT nodes (110) or loT devices in a local network (100) according to Claim 1, wherein
after receiving the root certificate (Z) from the root-certificate server (210), the computer (130) disconnects from the Internet (200) before the loT nodes (110) or the IoT device are checked.

3. Method for communication of loT nodes (110) or loT devices in a local network (100) according to Claim 1 or 2, wherein
each loT node (110) or loT device has a local and unique host name, in particular an IPv6 link local address or a multicast domain name system mDNS network name.

4. Method for communication of loT nodes (110) or loT devices in a local network (100) according to any of Claims 1 to 3, having the additional steps:
integrating loT nodes (110) or loT devices into a virtual local network (101, 102) in the form of a local public-key infrastructure,
wherein each of these loT nodes (110) or loT devices is assigned a second cryptographic key pair.

5. Method for communication of loT nodes (110) or loT devices in a local network (100) according to any of Claims 1 to 4, having the additional steps:
resetting an IoT node (110) or an loT device by means of a reset unit (300), which has a first interface (301) designed to be connected to a single pair Ethernet hybrid cable, wherein the reset unit (300) resets the loT node (110) or the loT device if invalid states occur on the single pair Ethernet hybrid line.

6. Method for communication of loT nodes (110) or loT devices in a local network (100) according to any of Claims 1 to 5, wherein
at least one of the loT nodes (110) or one of the loT devices has a client certificate in which usage rights, in particular read and/or write rights, of the loT node (110) or the loT device are stored.

7. Local Internet-of-Things loT network (100) having
a plurality of loT nodes (110) or loT devices, which each have a first interface for communication in the local network (120) in form of an Ethernet-network or a single pair Ethernet network with other loT nodes (110) or a computer (130) in the local network,
at least one computer (130) which is at least temporarily connected to the Internet (200),
wherein each loT node (110) or each loT device has a first public cryptographic key and a first private cryptographic key, the first private key being stored in advance or generated by the loT node (110) or the loT device itself,
**characterized in that** the computer (130) is designed to authenticate loT nodes (110) or loT devices in a local network (100) by sending a request for a root certificate (Z) by means of the computer (130) to a root-certificate server (210) on the Internet (200), said root-certificate server having at least one root certificate (Z) of a manufacturer of the loT nodes (110) or the loT devices, by receiving and storing the root certificate (Z) by means of the computer (130) and by checking by means of the computer (130) whether the loT nodes (130) or loT devices are original and unmodified devices by using the received root certificate (Z), wherein the root certificate (Z) is suitable for linking the first public key of the loT nodes (110) or loT devices to unique address information of the loT node (110) or the loT device that is valid exclusively in the local network,
wherein the computer (130) is designed to use the stored root certificate (Z) to check whether the first public key of the loT node (110) or the loT device is signed by the manufacturer of the loT node (110) or the loT device,
wherein the first private key of the loT node (110) or the loT device is checked based on a cryptographic method,
wherein the plurality of loT nodes (110) or loT devices are designed to be display-free and operating-element-free.

8. Local Internet-of-Things IoT network according to Claim 7, also having
at least one reset unit (300) which has a first interface (301), by means of which the reset unit (300) can be coupled to a single pair Ethernet hybrid line,
wherein the reset unit (300) is designed to reset a connected loT node (110) or a connected IoT device if invalid states occur on the single pair Ethernet hybrid line.

## Revendications

1. Procédé de communication de nœuds loT (110) ou d'appareils loT dans un réseau local (100) qui est connecté à Internet (200) au moins temporairement seulement par l'intermédiaire d'un ordinateur (130), dans lequel le réseau local (100) constitue un réseau Ethernet ou un réseau Ethernet à paire unique, dans lequel les nœuds loT (110) ou les appareils loT présentent respectivement une première interface de communication dans le réseau local (120) avec d'autres nœuds loT (110) ou l'ordinateur (130), dans lequel chaque nœud loT (110) ou chaque appareil loT présente une première clé cryptographique publique et une première clé cryptographique privée, dans lequel la première clé privée est préalablement déposée ou générée par le nœud loT (110) ou l'appareil loT lui-même, avec l'étape :
d'authentification de nœuds loT (110) ou d'appareils loT dans un réseau local (100), **caractérisé par**
- l'envoi d'une demande de certificat racine (Z) par l'ordinateur (130) à un serveur de certificat racine (210) sur Internet (200) qui présente au moins un certificat racine (Z) d'un fabricant de nœuds IoT (110) ou d'appareils loT,
- la réception et le stockage du certificat racine (Z) par l'ordinateur (130), et
- la vérification par l'ordinateur (130), à l'aide du certificat racine (Z) reçu, que les nœuds loT (130) ou les appareils loT sont des appareils originaux et non modifiés, dans lequel le certificat racine (Z) est apte à associer la première clé publique des nœuds loT (110) ou des appareils loT à une information d'adresse unique du nœud loT (110) ou de l'appareil loT valable exclusivement dans le réseau local,
dans lequel l'ordinateur (130) vérifie, à l'aide du certificat racine (Z) stocké, si la clé publique du nœud loT (110) ou de l'appareil loT est signée par le fabricant du nœud loT (110) ou de l'appareil IoT,
dans lequel la première clé privée du nœud loT (110) ou de l'appareil loT est vérifiée sur la base d'un procédé cryptographique,
dans lequel les nœuds IoT (110) ou les appareils loT sont conçus sans écran et sans éléments de commande.

2. Procédé de communication de nœuds loT (110) ou d'appareils loT dans un réseau local (100) selon la revendication 1, dans lequel
l'ordinateur (130) coupe la connexion à Internet (200) après la réception du certificat racine (Z) par le serveur de certificat racine (210), avant que le test des nœuds loT (110) ou de l'appareil loT n'ait lieu.

3. Procédé de communication de nœuds loT (110) ou d'appareils loT dans un réseau local (100) selon la revendication 1 ou 2, dans lequel
chaque nœud loT (110) ou chaque appareil loT présente un nom d'hôte local et unique, en particulier une adresse IPv6 link local ou un nom de réseau mDNS [Multicast Domain Name System - système de noms de domaine multidiffusion].

4. Procédé de communication de nœuds loT (110) ou d'appareils loT dans un réseau local (100) selon l'une quelconque des revendications 1 à 3, avec en outre les étapes :
d'intégration de nœuds loT (110) ou d'appareils loT dans un réseau local virtuel (101, 102) sous forme d'une infrastructure à clé publique locale,
dans lequel une deuxième paire de clés cryptographiques est associée à chacun de ces nœuds loT (110) ou appareils loT.

5. Procédé de communication de nœuds loT (110) ou d'appareils IoT dans un réseau local (100) selon l'une quelconque des revendications 1 à 4, avec en outre les étapes :
de réinitialisation d'un nœud loT (110) ou d'un appareil loT au moyen d'une unité de réinitialisation (300) qui présente une première interface (301) qui est configurée pour être raccordée à un câble hybride Ethernet à paire unique, dans lequel l'unité de réinitialisation (300) réinitialise le nœud loT (110) ou l'appareil loT si des états non valides sont présents sur la ligne hybride Ethernet à paire unique.

6. Procédé de communication de nœuds loT (110) ou d'appareils loT dans un réseau local (100) selon l'une quelconque des revendications 1 à 5, dans lequel
au moins un des nœuds loT (110) ou un des appareils loT présente un certificat client dans lequel sont stockés des droits d'utilisation, en particulier des droits de lecture et/ou d'écriture, du nœud loT (110) ou de l'appareil loT.

7. Réseau loT [Internet-of-Things - de l'Internet des objets] local (100) avec
une pluralité de nœuds loT (110) ou d'appareils loT qui présentent respectivement une première interface de communication dans le réseau local (120) sous la forme d'un réseau Ethernet ou d'un réseau Ethemet à paire unique avec d'autres nœuds IoT (110) ou un ordinateur (130) dans le réseau local,
au moins un ordinateur (130) qui est connecté au moins temporairement à Internet (200),
dans lequel chaque nœud loT (110) ou chaque appareil loT présente une première clé cryptographique publique et une première clé cryptographique privée, dans lequel la première clé privée est préalablement déposée ou est générée par le nœud IoT (110) ou l'appareil loT lui-même,
**caractérisé en ce que** l'ordinateur (130) est configuré pour authentifier des nœuds loT (110) ou des appareils loT dans un réseau local (100) en envoyant une demande de certificat racine (Z) par l'ordinateur (130) à un serveur de certificat racine (210) sur Internet (200) qui présente au moins un certificat racine (Z) d'un fabricant des nœuds loT (110) ou des appareils IoT, en recevant et en stockant le certificat racine (Z) par l'ordinateur (130) et en vérifiant, par l'ordinateur (130), à l'aide du certificat racine (Z) reçu, si les nœuds loT (130) ou les appareils loT sont des appareils originaux et non modifiés, dans lequel le certificat racine (Z) est apte à associer la première clé publique des nœuds loT (110) ou des appareils loT à une information d'adresse unique exclusivement valable localement du nœud loT (110) ou de l'appareil loT,
dans lequel l'ordinateur (130) est configuré pour vérifier, à l'aide du certificat racine (Z) stocké, si la première clé publique du nœud loT (110) ou de l'appareil loT est signée par le fabricant du nœud loT (110) ou de l'appareil IoT,
dans lequel la première clé privée du nœud loT (110) ou de l'appareil loT est vérifiée sur la base d'un procédé cryptographique,
dans lequel la multitude de nœuds loT (110) ou d'appareils IoT sont conçus sans écran et sans éléments de commande.

8. Réseau loT local selon la revendication 7, en outre avec
au moins une unité de réinitialisation (300) qui présente une première interface (301) au moyen de laquelle l'unité de réinitialisation (300) peut être couplée à une ligne hybride Ethernet à paire unique,
dans lequel l'unité de réinitialisation (300) est configurée pour réinitialiser un nœud loT (110) raccordé ou un appareil loT raccordé lorsque des états non valides sont présents sur la ligne hybride Ethernet à paire unique.
